# EUROPÄISCHE PATENTSCHRIFT

(11) **EP 1 356 319 B1**
(45) Veröffentlichungstag und Bekanntmachung des Hinweises auf die Patenterteilung: **09.02.2005**
(21) Anmeldenummer: 01992904.1
(22) Anmeldetag: 02.11.2001
(51) Int. Cl.: G02B 5/18

(54) **LICHTBEUGENDE BINÄRE GITTERSTRUKTUR**
LIGHT-DIFFRACTING BINARY GRATING STRUCTURE
STRUCTURE RESEAU BINAIRE PRODUISANT UNE DIFFRACTION DE LA LUMIERE

(30) Priorität: 03.11.2000 DE 10054503
(43) Veröffentlichungstag der Anmeldung: 29.10.2003
(73) Patentinhaber: OVD Kinegram AG, 6301 Zug (CH)
(72) Erfinder: TOMPKIN, Wayne, Robert, CH-5400 Baden (CH); STAUB, René, CH-6330 Cham (CH); SCHILLING, Andreas, CH-6300 Zug (CH)
(74) Vertreter: Zinsinger, Norbert
(86) Internationale Anmeldenummer: PCT/EP2001/012679
(87) Internationale Veröffentlichungsnummer: WO 2002/037145

(56) Entgegenhaltungen:
- EP-A- 0 328 086
- EP-A- 0 712 012
- DE-A- 3 117 092
- DE-A- 4 016 362
- US-A- 5 113 286
- US-A- 5 574 597
- US-A- 6 057 082

## Beschreibung

Die Erfindung bezieht sich auf eine lichtbeugende binäre Gitterstruktur und deren Verwendung in einem Sicherheitselement gemäss den Oberbegriffen der Ansprüche 1 und 10.

Solche Gitterstrukturen zeichnen sich durch eine hohe Beugungseffizienz und eine ausgeprägte Asymmetrie und Polarisation des gebeugten Lichts aus und eignen sich für die als visuelle Sicherheitsmerkmale bekannten Flächenmuster aus einem Mosaik von mit diffraktiven Strukturen belegten Flächenelementen.

Diese Sicherheitsmerkmale dienen als schwer zu fälschendes Echtheitsmerkmal für wertvolle Gegenstände, Dokumente, Ausweise, Banknoten usw. und sind z.B. in der EP 0 105 099 B1 beschrieben. Die Flächenelemente der Sicherheitsmerkmale weisen periodische diffraktive Gitterstrukturen mit vorbestimmten Gitterparametern, wie Profil, Spatialfrequenz und azimutale Orientierung usw., derart auf, dass sich der Anblick des beleuchteten Sicherheitsmerkmals beim Drehen und/oder Kippen in Farbe und Muster vorbestimmt ändert. Sind in benachbarten Flächenelementen entgegengesetzt ausgerichteten asymmetrischen Gitterstrukturen angeordnet, wie dies z.B. aus EP 0 360 969 A1 bekannt ist, vertauschen sich beim Drehen des Substrats um 180° die von einem Beobachter wahrgenommenen Intensitäten der Flächenelemente.

Eine einfache binäre Gitterstruktur und deren Verwendung für ein Sicherheitsmerkmal zeigt die DE 32 06 062 A1. Die binäre Gitterstruktur weist als Profil eine Struktur auf, die einer einfachen periodischen Rechteckfunktion folgt. Das Tastverhältnis der Rechteckfunktion, d.h. das Verhältnis der Breite des Tales zur Länge der Periode der Rechteckstruktur, ist konstant und weist den Wert 50 % auf, damit das gebeugte Licht die grösste Farbsättigung erhält.

Eine Weiterentwicklung des Sicherheitsmerkmals mit binären Gitterstrukturen beschreibt die EP 0 712 012 A1. Ein Flächenelement des Sicherheitsmerkmals ist mit einer periodische Rechteckstruktur belegt. Ueber das Flächenelement hinweg ändert sich das Tastverhältnis der Rechteckfunktion kontinuierlich von einem maximalen zu einem minimalen Wert, so dass bei einer Beleuchtung des Flächenelements der Grad der Farbsättigung in einem Bereich innerhalb des Flächenelements ein Maximum erreicht. Weiter sind nicht periodische Rechteckstrukturen gezeigt, die mit willkürlich gewählten Abmessungen der Tiefe und der Breite zu einer Beugungsstruktur angeordnet sind, um die Fälschungssicherheit der Sicherheitselemente zu erhöhen. allerdings ist das resultierende Muster sehr komplex und von einem Beobachter schwer als das echte Sicherheitselement zu identifizieren.

Aus der US 4'846'552 ist ein Elektronenstrahl - Lithographie Verfahren zur Herstellung binärer Gitterstrukturen für fokussierende optische Elemente bekannt. Auch bei den einfachen Rechteckstrukturen mit dem Tastverhältnis 50 % lassen sich durch eine geschickte Wahl der Tiefe der Struktur, z.B. 25 % der Periodenlänge der Rechteckstruktur hohe Beugungswirkungsgrade für linear polarisiertes Licht erreichen. Die Wichtigkeit der binären Gitterstrukturen liegt in der Tatsache begründet, dass sie mit grosser Genauigkeit hergestellt und durch Abformen vervielfältigt werden können.

Die oben genannten einfachen Rechteckstrukturen lassen sich mit holographischen Mitteln kopieren, wobei bei einer Kopie der symmetrischen Rechteckstruktur mit dem Tastverhältnis von etwa 50 % nur eine geringe Einbusse des Beugungswirkungsgrades auftritt. Der Beugungswirkungsgrad der Kopie verschlechtert sich, je asymmetrischer die Rechteckstruktur ist. Ein Flächenelement mit der Rechteckstruktur, deren Tastverhältnis sich gemäss EP 0 712 012 A1 längs einer vorbestimmten Richtung kontinuierlich ändert, weist in der Kopie anstelle der sich ändernden Farbsättigung eine Veränderung der Intensität der gebeugten Farbe auf. Da eine sich ändernde Farbsättigung von einer sich ändernden Farbintensität ohne Referenz zu einem echten Sicherheitselement visuell schwierig zu unterscheiden ist, kann eine unautorisierte Kopie des Sicherheitselements nicht sofort erkannt werden.

Der Erfindung liegt die Aufgabe zugrunde, eine kostengünstig zu vervielfältigende Gitterstruktur zu schaffen, die sich für die Verwendung in optisch diffraktiven Sicherheitselementen eignet, die aufwendig zu erzeugen und schwer zu kopieren ist.

Die genannte Aufgabe wird erfindungsgemäss durch die in den Kennzeichen der Ansprüche 1 und 10 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:
- Figur 1: eine Ansicht auf eine binäre Gitterstruktur,
- Figur 2a-c: Querschnitte durch ein Laminat mit der Gitterstruktur,
- Figur 3a-c: Rechteckstrukturen,
- Figur 4: eine Mesastruktur,
- Figur 5a-c: Beispiele der Mesastrukturen,
- Figur 6a+b: Flächenmuster mit der Mesastruktur nach Fig. 5a,
- Figur 7a-c: die Flächenmuster mit der Mesastruktur nach Fig. 5b,
- Figur 8a-c: die Flächenmuster der Figuren 7a-c um 180° gedreht,
- Figur 9a-c: die Flächenmuster mit der Mesastruktur nach Fig. 5c,
- Figur 10a-c: die Flächenmuster der Figuren 9a-c um 180° gedreht,
- Figur 11: eine andere Ausführung des Flächenmusters und
- Figur 12: eine zweidimensionale Mesastruktur.

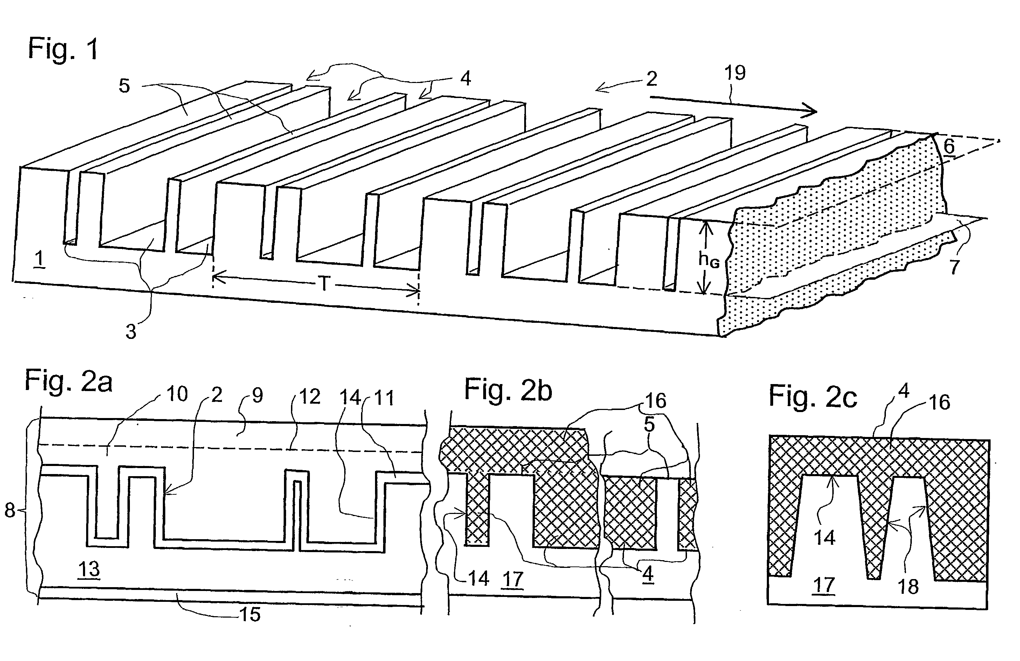

Ein in der Figur 1 dargestellter Ausschnitt aus einer periodischen binären Gitterstruktur weist eine in ein flaches Substrat 1 abgeformte mikroskopisch feine Profilform einer Mesastruktur 2 auf. Von der Oberseite des Substrats 1 sind Talböden 3 von Tälern 4 abgesenkt. Sie unterteilen die Oberfläche in Hochebenen 5 der Mesastruktur 2, wobei die Täler 4 einen im wesentlichen rechteckigen Querschnitt aufweisen. Wenigstens drei Täler 4 und drei Hochebenen 5 bilden eine Periode T der Mesastruktur 2. Die Hochebenen 5 liegen in der Ebene 6 der Oberfläche des Substrats 1. Die Talböden 3 definieren eine zur ersten Ebene 6 parallele, um eine Profilhöhe h_{G} von der Oberfläche des Substrats 1 abgesenkte zweite Ebene 7. Solche Gitterstrukturen mit nur zwei Ebenen 6, 7 werden auch binäre Gitterstrukturen genannt. Die Täler 4 trennen die Hochebenen 5 derart, dass innerhalb der Periode T keine weitere Periodizität auftritt.

Die periodische binäre Gitterstruktur beugt elektromagnetische Strahlung. Für visuell zu beurteilende Sicherheitsmerkmale ist die Länge der Periode T und die Profilhöhe h der Gitterstruktur der Wellenlänge λ des sichtbaren Lichts anzupassen, dessen Spektrum der Wellenlängen λ sich im Bereich 380 nm < λ < 780 nm erstreckt. Die Periode T weist beispielsweise einen Wert aus dem Bereich für T von 250 nm bis 5000 nm auf. Für "Zero Order" - Mikrostrukturen gilt die Bedingung λ/T ≥ 1. Bei den "Zero Order" - Mikrostrukturen sind alle Beugungsordnungen ausser der nullten unterdrückt. Unter der Bedingung λ/T < 1 hingegen wird das auf die binäre Gitterstruktur einfallende Licht auch in höhere Beugungsordnungen gebeugt. Diese Mikrostrukturen sind mit herkömmlichen holographischen Methoden nicht zu kopieren, wenn die Periode T ≤ 2 µm ist.

Die Profilhöhe h der Täler 4 ist konstant. Die mikroskopische Mesastruktur 2 ist optisch wirksam und weist parallele gerade, mäanderförmige oder gekrümmten Täler 4 und Hochebenen 5 auf. Die Mesastruktur 2 ist als periodische Gitterstruktur durch ihre Parameter, einen Azimutwinkel ϕ relativ zu einer ausgezeichneten Richtung, der Periode T bzw. Spatialfrequenz f = 1/T, eine Profilform der Mesastruktur 2, eine Profilhöhe h beschrieben. Die geometrische Profilhöhe h_{G} innerhalb der Mesastruktur 2 ist nicht mit der optisch wirksamen Profilhöhe h zu verwechseln. Füllt ein transparentes Material mit einem Brechungsindex n > 1 die Täler 4 auf, wird als Profilhöhe h die mit dem Brechungsindex n multiplizierte geometrische Profilhöhe h_{G} optisch wirksam. Die optisch wirksame Profilhöhe h ist aus dem Bereich 25 nm bis 5000 nm gewählt, wobei Vorzugswerte der Profilhöhe h z.B. im unteren Bereich bis zu einem Viertel der Wellenlänge, λ/4, liegen.Weist das hier dargestellte Substrat 1 die negative Profilform der Mesastruktur 2 auf, eignet sich das Substrat 1 zum Abformen der Mesastruktur 2 in Kunststoff oder zum Prägen von sehr weichem Metall (Ag, Al, Au, Cu usw.). Dies erlaubt eine kostengünstige Vervielfältigung der Mesastruktur 2. Härtere Metalle, wie Stahl, Kupfer-Nickel Legierung für Münzen usw., sind durch ein an sich bekanntes, Metall abtragendes Verfahren zu strukturieren.

Weiter ist es möglich, dass sich die Periode der Mesastruktur in einer Richtung parallel zu den Tälern so ändert, dass die Täler divergieren oder mäandern.

Die Figuren 2a bis 2c zeigen Querschnitte durch verschiedene Laminate 8 eines Sicherheitselementes mit der Mesastruktur 2. In der Figur 2a ist die Mesastruktur 2 in eine Basisfolie 9 aus glasklarem oder transparentem Kunststoff abgeformt. In einer Verarbeitungsmethode ist die rohe Basisfolie 9 vor dem Abformen der Mesastruktur 2 einseitig mit einer wenigstens transparenten thermoplastischen Lackschicht 10 überzogen. In die Lackschicht 10 wird die Mesastruktur 2 abgeformt. In einer kostengünstigen Ausführung ist die Lackschicht 10 bereits vor dem Abformen mit einer metallischen oder dielektrischen Reflexionsschicht 11 abgedeckt. Bei einer anderen Abformmethode ist die Basisschicht 9 mit der mittels ultraviolettem Licht härtbaren, transparenten Lackschicht 10 überzogen. Die Matrize der Mesastruktur 2 wird während des Härtungsvorgang in die noch weiche, noch leicht verformbare Lackschicht 10 abgeformt. Bei beiden Methoden ist die Dicke der Lackschicht 10 grösser als die Profilhöhe h_{G} (Fig. 1). Falls die Basisschicht 9 nur als Träger für die Lackschicht 10 dient, um ein sehr dünnes Laminat 8 herzustellen, ist zwischen der Basisfolie 9 und der Lackschicht 10 eine durch die gestrichelte Linie 12 in der Darstellung der Figur 2a angedeutete Trennschicht ausgebildet. Die Trennschicht ermöglicht nach dem Aufbringen des Sicherheitselementes auf eine Unterlage das Entfernen der Basisfolie 9. Nach dem Härten wird die metallische oder dielektrische Reflexionsschicht 11 aufgebracht. Der durch die Reflexionsschicht 11 erzeugte Sprung im Brechungsindex n macht eine Grenzfläche 14 mit der Mesastruktur 2 optisch wirksam. Auf die Abformseite wird anschliessend eine die Täler verfüllende Schutzschicht 13 aufgetragen. Die freie Oberfläche der Schutzschicht 13 wird anschliessend mit einer Klebeschicht 15 ausgerüstet oder das Material der Schutzschicht 13 ist selbst ein Kleber. Das Sicherheitselement ist durch die über der Mesastruktur 2 angeordneten Schichten 9, 10 hindurch sichtbar. Sind sowohl die Reflexionsschicht 11, die Schutzschicht 13 und die allfällige Kleberschicht 15 transparent, ist das Sicherheitselement transparent und eignet sich zum Schützen von individuellen Indicia auf einem Dokument. Die Indicia bleiben durch das auf das Dokument aufgeklebte Sicherheitselement hindurch sichtbar.

Das transparente Material ist optisch klar und lässt das ganze Spektrum des sichtbare Lichts (= glasklares Material) oder nur gewisse Spektralbereiche desselben (= farbiges Material) durch.

Das Laminat 8 in der Figur 2b zeigt eine weitere Anordnung der Deckschicht 16 und einer Basisschicht 17, deren gemeinsame Grenzfläche 14 die Mesastruktur 2 (Fig. 1) definiert. Die Materialien der beiden Schichten 16, 17 unterscheiden sich in ihren Brechungsindices n₁, n₂ und bewirken ebenfalls einen die Mesastruktur 2 definierenden Sprung Δn im Brechungsindex. Damit die Mesastruktur 2 optisch wirksam und gebeugtes Licht visuell erkennbar ist, muss an der gemeinsamen Grenzfläche 14 der Sprung Δn = |n₁ - n₂| > 0.1 sein. Die beiden Schichten 16, 17 sind in einer Ausführung zwei transparente Kunststoffe. In einer anderen Ausführung ist die Basisschicht 17 das metallische Substrat 1 (Fig. 1), das mit der transparenten, die Täler 4 verfüllenden Deckschicht 16 aus Kunststoff ausgerüstet ist.

In der Ausführung links in der Figur 2b überdeckt die Kunststoffschicht 16 auch die Hochebenen 5, während in der Ausführung rechts die Kunststoffschicht 16 nur gerade die Täler 4 verfüllt. Die gemeinsame, die Mesastruktur 2 (Fig. 1) definierende Grenzfläche 14 zwischen der Metalloberfläche des Substrats 1 und der Kunststoffschicht weist eine hohe Beugungseffizienz E auf. Eine Anwendung der rechts gezeigten Ausführung des Laminats 8 ist die Schicht 17 eine Kupfer-Nickel-Legierung, wie sie zum Beispiel für Münzen verwendet werden, in deren Oberfläche die Mesastruktur 2 durch Materialabtrag, z.B. mittels Aetzen oder intensivem Laserlicht, eingearbeitet ist.

Fabrikatorisch bedingt, weisen die Querschnitte der Täler 4 kleine Abweichungen von der idealen Rechteckform auf. Die Figur 2c zeigt einen Ausschnitt des Laminats 8 (Fig. 2a). Die durch die Grenzfläche 14 zwischen den Schichten 16, 17 definierten Seitenwände 18 der Täler 4 sind derart V-förmig geneigt, dass die Täler 4 trapezförmige Querschnitte aufweisen. Zudem sind die Kanten mit grosser Wahrscheinlichkeit verrundet, was aus zeichnerischen Gründen in der Figur 2c nicht dargestellt ist. Im Gegensatz zur Darstellung in der Figur 2c sind die Abweichung von den reinen Rechteckformen der Mesastruktur 2 so klein, dass die Querschnitte als im wesentlichen rechteckförmig zu betrachten sind.

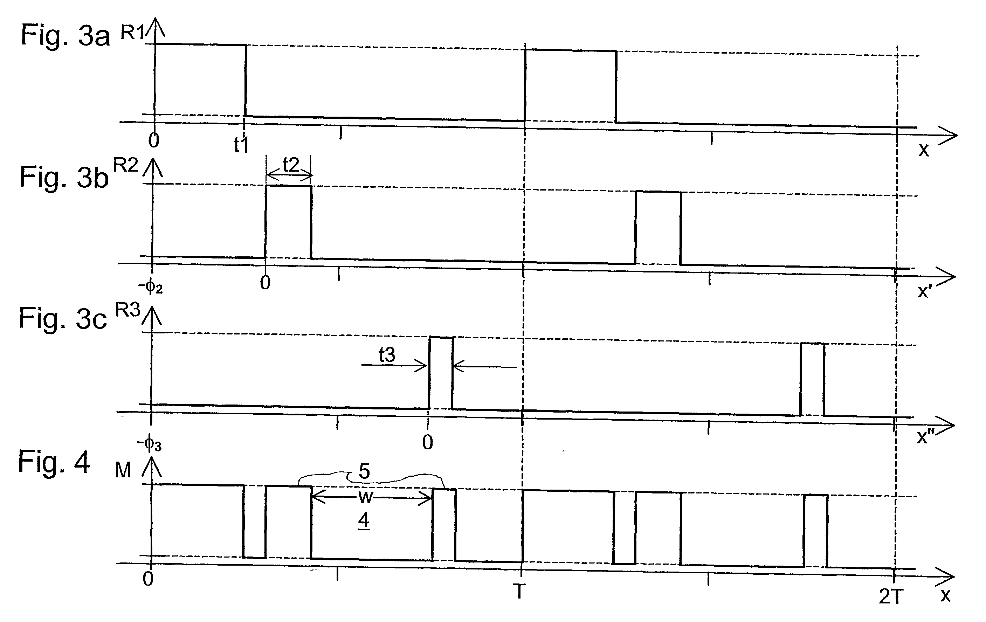

Die Mesastruktur 2 in der Figur 1 wird durch eine Rechteckfunktion M(x) (Fig. 4) längs eines Weges x in der Richtung eines Pfeils 19, der parallel zur Ebene 6 und senkrecht zu den Tälern 4 gerichtet ist, beschrieben.

Die Figuren 3a bis 3c und 4 zeigen als Beispiel die periodischen Rechteckfunktionen R1(x), R2(x'), R3(x") und M(x), die über zwei aufeinander folgenden Perioden T längs des Weges x, x' oder x" dargestellt sind. Die Rechteckfunktion M(x) entsteht aus einer additiven Ueberlagerung von wenigstens drei phasenverschobenen Rechteckstrukturen R1(x), R2(x'), R3(x") mit der Periode T der Mesastruktur 2. Die N Rechteckstrukturen R1(x), R2(x'), R3(x") erhalten bei der Summierung zu M(x) gegeneinander eine Phasenverschiebung φ₁, φ₂, φ₃, ... derart, dass die Hochebene 5 der einen Rechteckstruktur in die Täler 4 der N-1 anderen Rechteckstrukturen fallen. Diese Bedingung sichert der Summenfunktion M(x) die binäre Gitterstruktur.

In der Figur 4 ist die periodische Rechteckfunktion M(x) die Summe der N = 3 Rechteckfunktionen, die in den Figuren 3a bis 3c dargestellt sind. Die Rechteckfunktion R1 weist in diesem Beispiel eine Phasenverschiebung φ₁ = 0° auf, daher ist die Summe M(x) = R1(x) + R2(x+φ₂) + R3(x+φ₃).

Das Verhältnis der Impulsbreite t der Rechteckimpulse R zur Periodenlänge T heisst Tastverhältnis t/T. Wenigstens eine Rechteckfunktion R weist ein Tastverhältnis von höchstens 6 % auf, beispielsweise die Rechteckfunktion R3(x") in der Darstellung der Figur 3c. In einer Ausführung ist diese kleinste Impulsbreite t der Mesastruktur 2 höchstens ein Fünftel der Wellenlänge λ des einfallenden sichtbaren Lichts.

Die Phasenverschiebungen φ₁, φ₂, φ₃, ... und die Impulsbreiten t1, t2, t3 ... sind so bestimmt, dass einerseits in der resultierenden Rechteckfunktion M(x) der Mesastruktur 2 nur ein einziges Tal 4 zwischen zwei Hochebenen 5 eine grösste Weite w grösser als ein Siebtel der Periode T aufweist. Andererseits misst wenigstens ein Tal 4 eine kleinste Weite w von höchstens einem Fünftel der Wellenlänge λ. Parameter, wie Anzahl N, die Periode T, die Profilhöhe h, die Phasenverschiebung φ und die Impulsbreite t, bestimmen die Mesastruktur 2.

Eine kleinste Strukturbreite der Mesastruktur 2 ist, fabrikatorisch bedingt, nicht zu unterschreiten. Mit der kleinsten Strukturbreite ist der kleinste der Werte der in der Mesastruktur 2 angeordneten Impulsbreiten t und Weiten w bezeichnet. Die kleinste fabrikatorisch beherrschbare Strukturbreite hängt von der geometrischen Profilhöhe h_{G} ab, da ein Abformen der kleinsten Strukturbreite von mehr als der Hälfte der geometrischen Profilhöhe h_{G} grosse fabrikatorische Abformungsschwierigkeiten bereitet. Die heute technisch erreichbare kleinste Strukturbreite beträgt etwa 50 nm bei einer geometrischen Profilhöhe h_{G} bis zu 100 nm.

Durch die oben erwähnten Bedingungen ist die Anzahl N der die Funktion M(x) bildenden Rechteckfunktionen R(x) nach oben durch die Periodenlänge T und der kleinsten Strukturbreite auf etwa 10 beschränkt, wobei bevorzugt N im Bereich 3 bis und mit 5 liegt.

In einer Ausführung der Mesastruktur 2 mit der Periode T ist einerseits die Summe der Impulsbreiten t aller Hochebenen 5 in der einen Halbperiode T/2 grösser als die Summe der Weiten w aller Täler 4 in der gleichen Halbperiode T/2 und andererseits ist in der zweiten Halbperiode T/2 die Summe der Impulsbreiten t aller Hochebenen 5 kleiner als die Summe der Weiten w aller Täler 4 der zweiten Halbperiode T/2. Jede Halbperiode T/2 umfasst wenigstens ein Tal 4 und eine Hochebene 5. Eine solche Mesastruktur 2 weist ein asymmetrisches Beugungsverhalten auf und lenkt das einfallende Licht asymmetrisch in die verschiedenen Beugungsordnungen ab. Der asymmetrischen Mesastruktur 2 ist eine ausgezeichnete Richtung (Gittervektor) zugeordnet, die durch einen in der Ebene 6 gelegenen, senkrecht zu den Tälern 4 gezeichneten Pfeil 19 (Fig. 1) markiert ist.

Die oben beschriebenen Mesastrukturen 2 weisen mikroskopische und submikroskopische Strukturen auf, d.h. Strukturbreiten kleiner als die Wellenlänge λ des Lichtes. Die Skalartheorie kann für solche Strukturen nicht einmal mehr qualitativ das Beugungsverhalten der submikroskopischen Mesastruktur 2 beschreiben. Nur eine Anwendung der exakten elektromagnetischen Theorie und genaue Berechnungen, wie sie z.B. im Buch "Electromagnetic Theory of Gratings" von R. Petit, Herausgeber, Springerverlag, Heidelberg 1980 enthalten sind, vermögen mit einem grossen Rechenaufwand das Beugungsverhalten der Mesastrukturen 2 mit submikroskopischen Strukturen zu beschreiben. Die Skalartheorie versagt, weil das Verhalten des Lichts für die TE- und TM- polarisierten elektromagnetischen Wellen beim Einfall auf die binäre Gitterstruktur völlig verschieden ist.

Im Falle der TE - Polarisation, bei der das elektrische Feld parallel zu den Tälern 4 der Mesastruktur 2 ausgerichtet ist, fliessen so starke Oberflächenströme in der Reflexionsschicht 11 (Fig. 2a) bzw. in der Grenzschicht 14 (Fig. 2b), dass die Mesastruktur 2 wie ein Spiegel wirkt. Heuristisch gesagt, dringt das Feld der TE - polarisierten Wellen nicht in die Täler 4 der Mesastruktur 2 ein und erfährt daher die Wirkung der Mesastruktur 2 nicht. Im Falle der TM - Polarisation, bei der das elektrische Feld senkrecht zu den Tälern 4, also in Richtung des Pfeils 19 (Fig. 1) der Mesastruktur 2 ausgerichtet ist, werden die Oberflächenströme in der Schicht 11 bzw. 14 nicht so leicht erzeugt. Das elektrische Feld der TM - Wellen kann daher in die Tiefe der Täler 4 vordringen und wird durch die Mesastruktur 2 so beeinflusst, dass die TM-Wellen gebeugt werden.

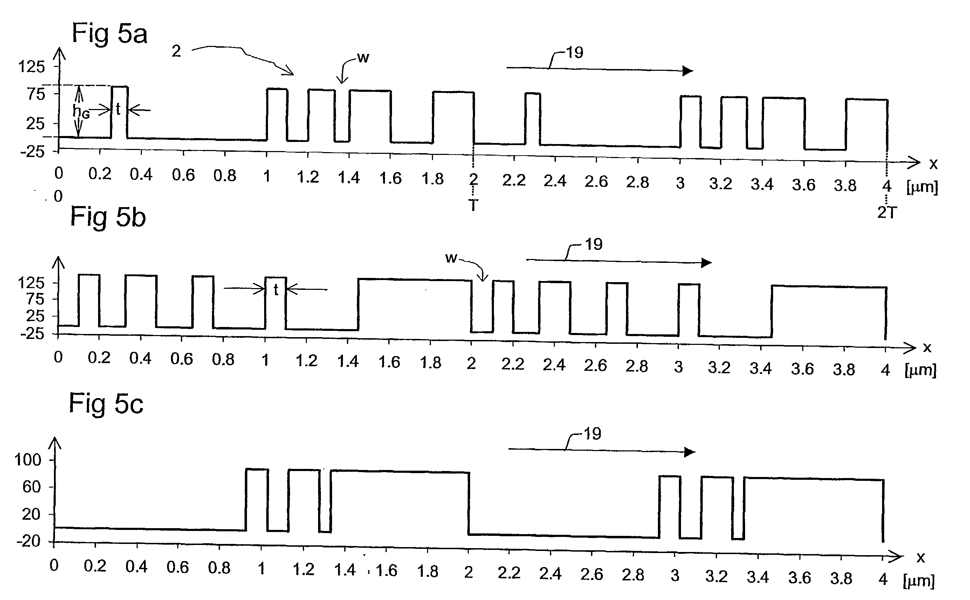

Die lichtbeugenden binären Gitterstrukturen, die als Profil die asymmetrischen Mesastrukturen 2 mit den submikroskopischen Strukturelementen aufweisen, zeigen bei der Beleuchtung mit senkrecht auf die Mesastrukturen 2 einfallendem Licht aussergewöhnliche Beugungseigenschaften. Das einfallende Licht wird hauptsächlich in eine einzige Beugungsordnung gebeugt, während das gebeugte Licht in den übrigen Beugungsordnungen nur geringe, visuell kaum wahrnehmbare Intensitäten aufweist. In den Figuren 5a bis 5c sind als Beispiel die Rechteckfunktionen M(x) von drei Mesastrukturen 2 mit einer Periode von T = 2 µm über zwei Perioden T dargestellt. Auf der Abszisse ist die Wegstrecke x in Mikrometer in Richtung des Pfeils 19 abgetragen, während auf der Ordinate die geometrische Profilhöhe h_{G} in Nanometer angegeben ist. Die binäre Gitterstrukturen sind in einem Laminat aus Kunststoff (Brechungsindex n ≈ 1,5) gemäss der Figur 2a eingebettet, wobei die Reflexionsschicht 11 (Fig. 2a) durch eine etwa 40 nm bis 70 nm dicken Schicht aus Aluminium gebildet ist, die die Mesastruktur 2 definiert. Für Licht mit Wellenlängen im Bereich von λ = 435 nm (blau) bis 550 nm (grün) sind die nachstehend beschriebenen Polarisations- und/oder Kontrasteffekte ausgeprägter als für längere Wellenlängen.

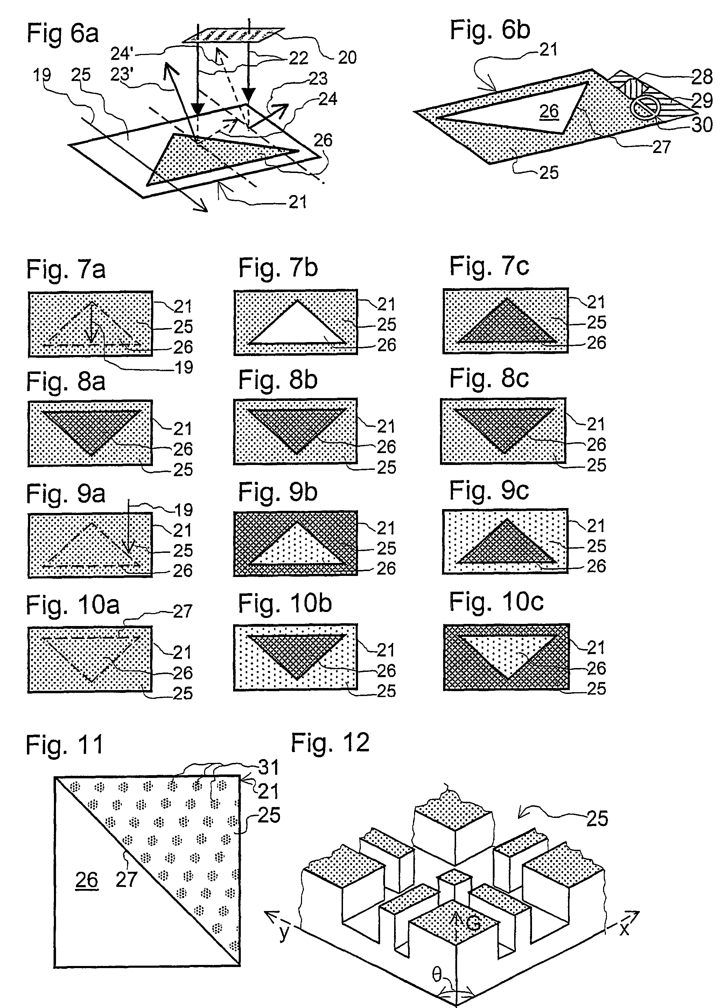

Die Prüfung auf den Einfluss der Polarisationsvermögens der Gitterstruktur erfolgt dadurch, dass, wie in der Figur 6a gezeigt, ein Polarisationsfilter 20 aus dem auf ein Flächenmuster 21 einfallenden Licht 22 die unerwünschten, TE polarisierten bzw. TM polarisierten Wellen ausfiltert. Das Polarisationsfilter 20 ist mit der gleichen Wirkung auch zwischen der Gitterstruktur und dem Auge eines Beobachters anzuordnen, wobei das gebeugte Licht 23,23',24,24' gefiltert wird.

### Beispiel 1:

Die binäre Gitterstruktur in der Figur 5a weist das Profil der Mesastruktur 2 auf, deren beschreibende Funktion M(x) aus den N = 5 Rechteckfunktionen R(x) der Tabelle 1 zusammengesetzt ist. Die ausgezeichnete Richtung der Gitterstruktur, der Gittervektor, ist durch den Pfeil 19 angedeutet.

**Tabelle 1**

| Rechteckfunktion | Impulsbreite t | Phasenverschiebung φ |
|---|---|---|
| R1(x) | 75 nm | 45° |
| R2(x) | 100 nm | 180° |
| R3(x) | 125 nm | 216° |
| R4(x) | 200 nm | 238½° |
| R5(x) | 200 nm | 324° |

Die Profilhöhe h_{G} beträgt 90 nm und die kleinste Strukturbreite beträgt 75 nm, wobei die kleinste Strukturbreite sowohl als Impulsbreite t = 75 nm bei der Rechteckfunktion R1 als auch als Weite w = 75 nm des Tales 4 (Fig. 1) zwischen den Rechteckfunktionen R3 und R4. Alle Impulsbreiten sind deutlich kleiner als die Wellenlängen des sichtbaren Lichts.

Die Mesastruktur 2 nach der Figur 5a beugt bei senkrecht einfallendem Licht ein Grossteil sowohl der TE polarisierten Wellen (= TE - Wellen) als auch der TM polarisierten Wellen (= TM - Wellen) in die minus erste Beugungsordnung. Die Intensität des in die minus erste Beugungsordnung gebeugten Lichts ist deutlich, wenigstens um einen Faktor 5, grösser als das in eine der übrigen Beugungsordnungen gebeugten Lichts senkrecht zu den Tälern 4 in Richtung des Gittervektors.

Die Figur 6a zeigt das Flächenmuster 21, das beispielhaft aus zwei Flächenelementen 25, 26 besteht. Das rechteckige Hintergrundelement 25 ist mit der binären Gitterstruktur nach Figur 5 so belegt, dass ihre ausgezeichnete Richtung parallel zum Pfeil 19 ausgerichtet ist. Das dreieckige Innenelement 26 weist dieselbe binäre Gitterstruktur wie das Hintergrundelement 25 auf, jedoch ist die ausgezeichnete Richtung der binären Gitterstruktur entgegengesetzt zum Pfeil 19 ausgerichtet. Fällt das Licht 22 senkrecht auf die Strukturen des Flächenmusters 21 ein, erblickt der Beobachter, der beispielsweise in die dem Pfeil 19 entgegengesetzte Richtung unter dem Beugungswinkel für die erste Beugungsordnung für die Wellenlänge λ = 435 nm (blau) bis 550 nm (grün) schaut, ein im gebeugten Licht 23 der minus ersten Beugungsordnung hell strahlendes, blaues bis grünes Hintergrundelement 25 mit einem im gebeugten Licht 24 der plus ersten Beugungsordnung schwach leuchtendes, blauen bis grünen Innenelement 26. Wird das Flächenmuster 21 in seiner Ebene um 180° gedreht, wie in der Figur 6b dargestellt ist, vertauschen sich im Flächenmuster 21 die Intensitäten pro Flächeneinheit, die Flächenhelligkeiten, des Hintergrundelements 25 und des Innenelements 26, d.h. das Hintergrundelement 25 lenkt nun Licht 24' (Fig. 6a) der plus ersten Beugungsordnung zum Auge des Beobachters und erscheint daher dunkel und das nun im gebeugten Licht 23' (Fig. 6a) der minus ersten Beugungsordnung betrachtete Innenelement 26 scheint hell auf. Die Polarisation des Lichts beeinflusst die beobachteten Intensitätsverhältnisse nicht, da sowohl die TE - als auch die TM - Wellen hauptsächlich in die minus erste Beugungsordnung abgelenkt werden. Verschieden dichte Rasterungen in den Zeichnungen verdeutlichen in den Figuren 6a bis 10c die Flächenhelligkeiten der beiden Elemente 25, 26 des beleuchteten Flächenmusters 21.

### Beispiel 2:

In der Figur 5b folgt das Profil der asymmetrischen Mesastruktur 2 (Fig. 5a) der beschreibenden Funktion M(x), die sich als Summe der N = 5 Rechteckfunktionen R(x) aus der Tabelle 2 ergibt.

Die Profilhöhe h_{G} beträgt 150 nm, wobei die kleinste Strukturbreite 100 nm ist. Die kleinste Strukturbreite findet sich sowohl als Impulsbreite t =100 nm bei den Rechteckfunktionen R1(x), R3(x) und R4(x) als auch als Weite w = 100 nm des Tales 4 (Fig. 1) zwischen den Rechteckfunktionen R5(x) und R1(x+T) der folgenden Periode T (Fig. 5a) im Profil der Mesastruktur 2.

**Tabelle 2**

| Rechteckfunktion | Impulsbreite t | Phasenverschiebung φ |
|---|---|---|
| R1(x) | 100 nm | 18° |
| R2(x) | 150 nm | 58½° |
| R3(x) | 100 nm | 117° |
| R4(x) | 100 nm | 180° |
| R5(x) | 550 nm | 261° |

Die Mesastruktur 2 nach der Figur 5b beugt bei senkrecht einfallendem Licht ein Grossteil der TE - Wellen in eine einzige der minus bzw. plus Beugungsordnungen und praktisch kein Licht in die übrigen Beugungsordnungen. Die Beugungseffizienz E_{TE} in einer der übrigen Beugungsordnungen ist deutlich geringer (mindestens um einen Faktor 30) als beispielsweise die Beugungseffizienz E_{TE-1} des in die minus erste Beugungsordnung gebeugten Lichts, d.h. E_{TE-1}/E_{TE} ≥ 30 bzw. E_{TE+1}/E_{TE} ≥ 30. Für die TM - Wellen ist die Beugungseffizienz E_{TM} in allen Beugungsordnungen um wenigstens eine Grössenordnung kleiner als die Beugungseffizienz E_{TM 0} in der nullten Ordnung (E_{TM 0}/E_{TM} ≥ 10), da diese binäre Gitterstruktur für die TM - Wellen als Spiegel wirkt und die TM - Wellen in die nullte Beugungsordnung reflektiert.

Die Figuren 7a bis 8c zeigen die beispielhaft aus zwei Flächenelementen 25, 26 bestehenden Flächenmuster 21. Das rechteckige Hintergrundelement 25 ist mit einer symmetrischen Gitterstruktur, z.B. mit einem sinusförmigen Profil, mit dem Profil einer symmetrischen Rechteckfunktion usw., belegt. Das dreieckige Innenelement 26 weist die binäre Gitterstruktur mit der in Figur 5b gezeigten Mesastruktur 2 (Fig. 1) auf, wobei in den Figuren 7a bis 8c die ausgezeichnete Richtung, Pfeil 19, der binären Gitterstruktur von der Spitze zur Basislinie des Innenelements 26 ausgerichtet ist. Die symmetrische Gitterstruktur des Hintergrundelements 25 weist dieselbe Periode T und dieselbe azimutale Ausrichtung wie die binäre Gitterstruktur des Innenelements 26 auf und hat eine Beugungseffizienz von wenigstens 40 % in eine der plus und minus ersten Beugungsordnungen.

Fällt unpolarisiertes Licht 22 (Fig. 6a) senkrecht auf die Strukturen des in der Figur 7a gezeigten Flächenmusters 21 ein, erblickt der Beobachter, der in die dem Pfeil 19 entgegengesetzte Richtung unter dem Beugungswinkel für die erste Beugungsordnung für die Wellenlänge λ = 435 nm (blau) bis 550 nm (grün) schaut, im gebeugten Licht 23 (Fig. 6a) das Flächenmuster 21 als gleichmässig hell strahlende, blaue bis grüne Fläche, da das Hintergrundelement 25 und das Innenelement 26 die fast gleiche Beugungseffizienz aufweisen. Der Kontrast an der gemeinsamen Grenze der beiden Elemente 25, 26 verschwindet daher, und das Innenelement 26 ist auf dem Hintergrundelement 25 nicht erkennbar. Nach einer Drehung um 180° in der Ebene des in der Figur 7a dargestellten Flächenmusters 21 hat sich das Flächenmuster 21 in der Figur 8a im unpolarisierten Licht verändert, wobei sich das Innenelement 26 als dunkle Fläche vom Hintergrundelement 25 abhebt, da die binäre Gitterstruktur des Innenelements 26 in die plus erste Beugungsordnung nur Licht mit geringer Effizienz beugt. Das mit dem symmetrischen Beugungsgitter belegte Hintergrundelement 25 hingegen ist vor und nach der Drehung um 180° für den Beobachter in der Flächenhelligkeit unverändert.

Die Figuren 7b und 8b zeigen das Flächenelement 21 betrachtet in linear polarisiertem Licht, wobei die TM - Wellen durch das Polarisationsfilter 20 (Fig. 6a) ausgefiltert werden. In der Figur 7b erstrahlt das Innenelement 26 im ungeschwächten gebeugten Licht 23 (Fig. 6a) der minus ersten Beugungsordnung, während aus dem gebeugten Licht, das vom Hintergrundelement 25 (Fig. 6a) gebeugt wird, der Anteil der TM - Wellen eliminiert ist und die Flächenhelligkeit des Hintergrundelements 25 daher abgeschwächt ist. Nach der Drehung des Flächenelements 21 in seiner Ebene um 180° weist das Hintergrundelement 25 die gleiche Flächenhelligkeit wie vor der Drehung auf. Das Innenelement 26 hingegen hat eine deutlich geringere Helligkeit als das Hintergrundelement 25, da die Intensität in der plus ersten Beugungsordnung klein ist, wie dies in Figur 8b verdeutlicht ist.

Die Figuren 7c und 8c zeigen das Flächenelement 21 betrachtet in linear polarisiertem Licht, wobei die TE - Wellen durch das Polarisationsfilter 20 (Fig. 6a) ausgefiltert werden. Unabhängig von der Orientierung 0° bzw. 180° weist das Flächenmuster 21 im Licht der TM - Wellen ein gleiches Aussehen auf. Das Hintergrundelement 25 hat in beiden Orientierungen die gleiche Flächenhelligkeit. Da die TE - Wellen ausgefiltert werden, ist die Flächenhelligkeit des Innenelements 26 in beiden Orientierungen etwa um einem Faktor 4 bis 6 deutlich schwächer als die des Hintergrundelements 25, da die binäre Gitterstruktur die TE - Wellen nur mit geringer Effizienz beugt.

Das Verhältnis der Flächenhelligkeiten im Flächenelement 21 der Figuren 8a bis 8c bleibt erhalten, unabhängig davon, ob das vom Beobachter wahrgenommene gebeugte Licht polarisiert ist oder nicht.

### Beispiel 3:

Die binäre Gitterstruktur der Figur 5c weist das Profil der asymmetrischen Mesastruktur 2 (Fig. 1) mit einer Periode von T = 2 µm auf. Das Profil der Mesastruktur 2 ist durch die Funktion M(x) als Summe der N = 3 Rechteckfunktionen R(x) der Tabelle 3.

**Tabelle 3**

| Rechteckfunktion | Impulsbreite t | Phasenverschiebung φ |
|---|---|---|
| R1(x) | 100 nm | 166½° |
| R2(x) | 150 nm | 202° |
| R3(x) | 670 nm | 239½° |

Die Profilhöhe h_{G} beträgt 90 nm und die kleinste Strukturbreite beträgt 55 nm, wobei die kleinste Strukturbreite als Weite w = 55 nm des Tales 4 (Fig. 1) zwischen den Rechteckfunktionen R2(x) und R3(x) der gleichen Periode T (Fig. 1) vorkommt. Die Mesastruktur 2 nach der Figur 5c beugt das senkrecht einfallende Licht 22 (Fig. 6a) bevorzugt in die beiden ersten Beugungsordnungen. Der Anteil des in die übrigen Beugungsordnungen gebeugten Lichts ist wesentlich geringer. Die Beugungseffizienz der Mesastruktur 2 für linear polarisierte TE - Wellen ist in der negativ ersten Beugungsordnung, E_{TE-1}, wenigstens doppelt so gross ist wie in der positiv ersten Beugungsordnung, E_{TE+1}. Hingegen ist die Beugungseffizienz der Mesastruktur 2 für linear polarisierte TM - Wellen in der positiv ersten Beugungsordnung, E_{TM+1}, wenigstens doppelt so gross wie in der negativ ersten Beugungsordnung, E_{TM-1}. Der höhere Wert der Beugungseffizienzen in der ersten Beugungsordnung sind sowohl für die TE als auch für die TM - Wellen wenigstens 20 mal grösser als die Intensitäten des gebeugten Lichts in einer der übrigen Beugungsordnungen, wobei idealerweise E_{TE-1} + E_{TM-1} ≈ E_{TM+1} + E_{TE+1} ist.

Die Figuren 9a bis 10c zeigen die beispielhaft aus zwei Flächenelementen 25, 26 bestehenden Flächenmuster 21. Wie im Beispiel 1 weisen das rechteckige Hintergrundelement 25 und das dreieckige Innenelement 26 die gleiche binäre Gitterstruktur mit Profil der Mesastruktur 2 (Fig. 1) gemäss der Figur 5c auf. In den Figuren 9a bis 10c ist die ausgezeichnete Richtung dieser binären Gitterstruktur im Hintergrundelement 25 parallel zum Pfeil 19 und im Innenelement 26 von der Basislinie zur Spitze des Innenelements 26 ausgerichtet, d.h. die ausgezeichneten Richtungen der binären Gitterstruktur im Hintergrundelement 25 und im Innenelement 26 sind einander entgegengesetzt.

Fällt unpolarisiertes Licht 22 (Fig. 6a) senkrecht auf die Strukturen des in der Figur 9a gezeigten Flächenmusters 21 ein, erblickt der Beobachter im gebeugten Licht 23 (Fig. 6a), 24 (Fig. 6a) das Flächenmuster 21 als gleichmässig hell strahlende, blaue bis grüne Fläche, unabhängig davon ob er unter dem Beugungswinkel für die erste Beugungsordnung für die Wellenlänge λ = 435 nm (blau) bis 550 nm (grün) in die dem Pfeil 19 entgegengesetzte Richtung oder, wie in der Figur 10a gezeigt, in der Richtung des Pfeils 19 schaut. Die Beugungseffizienz der Gitterstruktur im Hintergrundelement 25 und im Innenelement 26 sind für unpolarisiertes Licht in den beiden ersten Beugungsordnungen in etwa gleich.

Daher verschwindet der Kontrast an der gemeinsamen Grenze 27 der beiden Elemente 25, 26 in beiden azimutalen Orientierungen 0° und 180° und das Innenelement 26 ist in der Fläche des Hintergrundelements 25 nicht erkennbar.

Die Figuren 9b und 10b zeigen das Flächenelement 21 betrachtet in linear polarisiertem Licht, wobei die TM - Wellen durch das Polarisationsfilter 20 (Fig. 6a) ausgefiltert werden. In der Figur 7b erstrahlt das Innenelement 26 im ungeschwächten gebeugten Licht 23 (Fig. 6a) der minus ersten Beugungsordnung. Die Flächenhelligkeit des Hintergrundelements 25 hingegen ist um rund zwei Drittel reduziert, da nur noch die Beugungseffizienz E_{TE+1} der plus ersten Beugungsordnung wirksam ist, da durch das Polarisationsfilter 20 der Anteil der TM - Wellen eliminiert ist. Das Innenelement 26 weist somit eine grössere Flächenhelligkeit als das Hintergrundelement 25 auf. Nach der Drehung des Flächenelements 21 in seiner Ebene um 180° vertauschen sich die Flächenhelligkeiten des Hintergrundelements 25 und des Innenelements 26, wie dies beim Wechsel von der Figur 9b zur Figur 10b aus der Darstellung ersichtlich ist.

Die Figuren 9c und 10c zeigen das Flächenelement 21 betrachtet in linear polarisiertem Licht, wobei die TE - Wellen durch das um 90° in seiner Ebene gedrehte Polarisationsfilter 20 (Fig. 6a) ausgefiltert werden. Durch das Drehen des Polarisationsfilters um jeweils 90° vertauschen sich die Flächenhelligkeiten des Hintergrundelements 25 und des Innenelements 26, so dass die Darstellung der Figur 9b in die Darstellung der Figur 9c und Darstellung der Figur 10b in die Darstellung der Figur 10c übergeht. Auch durch das Drehen des Flächenmusters 21 in seiner Ebene in die Stellungen 0° und 180° vertauschen sich die Flächenhelligkeiten des Hintergrundelements 25 und des Innenelements 26, so dass die Darstellung der Figur 9c in die Darstellung der Figur 10c übergeht.

In einer Ausführung des Flächenelements 21 sind die Innenelemente 26 als alphanumerische Zeichen z.B. eines Textes oder als Barcode ausgebildet, die im polarisierten Licht auf dem Hintergrundelement 25 sichtbar sind, im üblichen unpolarisierten Tageslicht jedoch nicht erkennbar sind.

Die Beugungsstrukturen, die in den Figuren 7a bis 10c dargestellten Kombinationen verwendet sind, lassen sich im Flächenmuster 21 von der Ausrichtung zum Beobachter und der Polarisation abhängige Muster erzeugen, bei denen der Kontrast an gemeinsamen Grenzen 27 (Fig. 6b) auffällig ist bzw. verschwindet.

In einer Ausführung der Figur 6b ist im Flächenmuster 21 wenigstens ein Flächenelement 25 mit einer binären Gitterstruktur im Mosaik der Flächenelemente 26, 28, 29, 30 so angeordnet, dass in einer vorbestimmten Beugungsordnung wenigstens in einer Azimutrichtung ϕ die Summe der Beugungseffizienzen, E_{TE} + E_{TM}, für TE - und TM - Wellen des Flächenelements 25 im wesentlichen gleich der Summe der Beugungseffizienzen, E_{TE} + E_{TM}, für TE - und TM - Wellen des an das Flächenelement 25 angrenzenden Flächenelements 26 ist, so dass unter dem vorbestimmten Beugungswinkel die Farbe und die Flächenhelligkeiten der beleuchteten Flächenelemente 25, 26 gleich sind und der Kontrast an der gemeinsamen Grenze 27 der beiden Flächenelemente 25, 26 verschwindet. Dieses kennzeichnende Verhalten des Flächenmusters 21 ist ein Echtheitsmerkmal für Sicherheitselemente, das typischerweise bei holographischen Kopien fehlt. Die Kopien sind daher als solche erkennbar.

Wie am Beispiel der Figur 6a gezeigt ist, umfasst das Flächenmuster 21 nur der Einfachheit halber die beiden Elemente 25, 26. In einer praktischen Ausführung umfasst das Flächenmuster 21 gemäss Figur 6b eine grosse Anzahl von weiteren Flächenelementen 28 bis 30, die zur Erzeugung des gewünschten Flächenmusters 21 neben den obengenannten Beugungsstrukturen irgendwelche Beugungsstrukturen, spiegelnde bzw. streuende Strukturen oder absorbierende Oberflächen aufweisen.

In der Figur 11 ist das Flächenmuster 21 mit den beiden Flächenteilen 25, 26 gezeigt. Beispielsweise weist das binäre Gitter des Flächenelements 25 die höhere Beugungseffizienz als das Flächenelement 26 auf. Damit der Kontrast an der gemeinsamen Grenze 27 zwischen den Flächenteilen 25, 26 des Flächenmusters 21 in den oben beschriebenen Beispielen 2 und 3 unter vorbestimmten Beobachtungsbedingungen optimal verschwindet, müssen die Flächenhelligkeiten beider Flächenteilen 25, 26 aufeinander exakt abgestimmt werden. Dazu wird mit Vorteil wenigstens der Flächenanteil des binären Gitters mit der höheren Beugungseffizienz, hier innerhalb des Flächenelements 25, verringert, um so die Flächenhelligkeit des Flächenelements 25 abzuschwächen und dem anderen, lichtschwächeren Flächenelement 26 optimal anzupassen. Eine Verkleinerung des Flächenanteils der Gitterstruktur im Flächenelement 25 erfolgt durch ein wenigstens längs der gemeinsamen Grenze 27 regelmässiges Linien - oder Punktraster von kleinsten Rasterflächen 31. Die Rasterflächen 31 sind z.B. mit Beugungsstrukturen belegt, die ihr gebeugtes Licht in eine andere Richtung als die Gitter der Flächenelemente 25 und 26 ablenken. Nicht alle der Rasterflächen 31 innerhalb des Flächenelements 25 bzw. 26 müssen dieselbe optische Aktivität aufweisen. Die Rasterflächen 31 weisen je nach Erfordernis des Flächenmusters 21 anstelle der Beugungsaktivität auch andere optische Aktivitäten auf, wie sie durch streuende Strukturen oder absorbierende oder spiegelnde Flächen erzeugt werden. Die Dichte und der Anteil der Rasterflächen 31 entspricht der erforderlichen Schwächung der Flächenhelligkeit des Flächenelements 25, da die Gesamtheit der Rasterflächen 31 zu der über das Flächenelement 25 gemittelten Beugungseffizienz der binären Gitterstruktur nichts beitragen. Die gemittelten Beugungseffizienz ist daher kleiner. Wenigstens eine Abmessung der Rasterflächen 31 ist mit Vorteil kleiner als 0.3 mm, damit das menschliche Auge den Raster unter normalen Sichtbedingungen nicht bemerkt. Es ist nochmals anzumerken, dass der Raster in den Darstellungen der Figuren 6a bis 10c nur zur Unterscheidung der Flächenhelligkeiten mit zeichnerischen Mitteln dient.

In einer Ausführung sind die Strukturen der Rasterflächen 31 die eines eine Information enthaltenden Kinoforms oder Fourierhologramms. Nur bei einer monochromatischen Beleuchtung des diese Rasterflächen 31 aufweisenden Flächenelements 25 kann die Information auf einem Schirm sichtbar gemacht und gelesen werden.

Die Beugungsstrukturen vom Typ der oben beschriebenen Mesastrukturen 2 (Fig. 1) weisen den Vorteil auf, dass sie sich mit den bekannten holographischen Mitteln nicht kopieren lassen.

Die Figur 12 zeigt eine Gitterstruktur über der Ebene x/y, die durch eine binäre Gitterfunktion G aus zwei einander überlagerten Rechteckfunktionen M(x) und M(y) bestimmt ist, deren Täler 4 (Fig. 1) sich unter einem Kreuzungswinkel θ schneiden. Die Perioden T der beiden Rechteckfunktionen M(x) und M(y) sind nicht notwendigerweise gleich. Die beiden Rechteckfunktionen M(x) und M(y) dehnen sich unabhängig voneinander längs der Abszisse x bzw. y aus. In einer Ausführung erstreckt sich beispielsweise in Richtung der Abszisse x die Rechteckstruktur M(x) bzw. M(y) in das an das Flächenelement 25 mit der Gitterstruktur G angrenzende Flächenelement 26 (Fig. 6a), das demzufolge mit der Rechteckstruktur M(x) bzw. M(y) belegt ist. Die die Täler 4 verfüllende Lackschicht 10 (Fig. 2a) und weitere Schichten ist aus zeichnerischen Gründen weggelassen worden. Der Beobachter erblickt auf dem beleuchteten Flächenmuster 21 (Fig. 6a) unter dem vorbestimmten Beugungswinkel die Muster mit den Kontrastunterschieden unter den Azimutwinkeln ϕ mit den Werten 0°, θ°, 180° und 180°+ θ°, wobei die ausgezeichnete, durch den Pfeil 19 (Fig. 1) angegebene Richtung den Azimutwinkel 0° und θ den Kreuzungswinkel der beiden Funktionen M(x) und M(y) bzw. Koordinaten x, y bezeichnet. Aus technischen Gründen ist der Bereich der Werte für den Kreuzungswinkel θ auf den Bereich 30° bis 150° beschränkt.

## Patentansprüche

1. Sicherheitselement mit einer lichtbeugenden binären Gitterstruktur mit einer mikroskopischen Mesastruktur (2) aus durch im wesentlichen rechteckförmige Täler (4) getrennten Hochebenen (5), wobei die sich periodisch wiederholende Anordnung der Täler (4) innerhalb einer Periode (T) der Mesastruktur (2) eine additive Überlagerung von wenigstens drei phasenverschobenen Rechteckstrukturen (R) mit einer Impulsbreite (t₁; t₂; t₃; ...) der Periode (T) der Mesastruktur (2) ist, wobei die Rechteckstrukturen (R) gegeneinander eine Phasenverschiebung (φ₁; φ₂; φ₃;...) derart aufweisen, dass die Hochebenen (5) der einen Rechteckstruktur (R) in die Täler der anderen Rechteckstrukturen (R) fallen und dass die Mesastruktur (2) eine optisch wirksame Profilhöhe (h) mit einem Wert aus dem Bereich 25 nm bis 5000 nm besitzt,
**dadurch gekennzeichnet,**
**dass** eine Grenzfläche (14) der Mesastruktur (2) für sichtbares einfallendes Licht (22) einer Wellenlänge (λ) metallisch reflektierend ausgebildet ist und dass die Periode (T) der Mesastruktur (2) einen Wert im Bereich 250 nm bis 5000 nm aufweist und wenigstens ein Tal (4) zwischen zwei Hochebenen (5) eine Breite grösser als ein Siebtel der Periode (T) aufweist.

2. Sicherheitselement nach Anspruch 1,
**dadurch gekennzeichnet,**
**dass** die Grenzfläche (14) der Mesastruktur (2) als Reflexionsschicht (11) ausgebildet und zwischen einer Lackschicht (10) und einer Schutzschicht (13) angeordnet ist.

3. Sicherheitselement nach Anspruch 1,
**dadurch gekennzeichnet,**
**dass** die Mesastruktur (2) in eine Metalloberfläche abgeformt und optional mit einer die Täler (4) verfüllenden Schutzschicht (16) ausgerüstet ist.

4. Sicherheitselement nach einem der Ansprüche 1 bis 3,
**dadurch gekennzeichnet,**
**dass** die kleinste Strukturbreite der Mesastruktur (2) weniger als ein Fünftel der Wellenlänge (λ) des einfallenden Lichts (22) ist.

5. Sicherheitselement nach einem der Ansprüche 1 bis 4,
**dadurch gekennzeichnet,**
**dass** sich die Periode (T) der Mesastruktur (2) in einer Richtung parallel zu den Tälern (4) so ändert, dass die Täler (4) divergieren oder mäandern.

6. Sicherheitselement nach einem der Ansprüche 1 bis 5,
**dadurch gekennzeichnet,**
**dass** die Verteilung der Hochebenen (5) innerhalb einer Periode (T) der Mesastruktur (2) asymmetrisch ist, wobei in der einen Halbperiode die Summe der Impulsbreiten (t₁; t₂; t₃ ... ) aller Hochebenen (5) kleiner als die Summe der Impulsbreiten (t₁; t₂; t₃ ... ) aller Hochebenen (5) in der andern Halbperiode ist und dass die Parameter Impulsbreite (t₁; t₂; t₃; ...), Anzahl N der Rechteckstrukturen (R) und deren Phasenverschiebung (φ₁; φ₂; φ₃;...) derart vorbestimmt sind, dass die Mesastruktur (2) für das einfallende Licht (22) asymmetrische Beugungseffizienzen (E) für die verschiedenen Beugungsordnungen aufweist.

7. Sicherheitselement nach Anspruch 6,
**dadurch gekennzeichnet;**
**dass** die asymmetrische Verteilung der Hochebenen (5) innerhalb einer Periode (T) der Mesastruktur (2) derart ausgebildet ist, das sowohl TE polarisierte Wellen des Lichts (22) als auch TM polarisierte Wellen des Lichts (22) asymmetrisch in eine einzige, vorbestimmte negative oder positive Beugungsordnung abgelenkt sind.

8. Sicherheitselement nach Anspruch 6,
**dadurch gekennzeichnet,**
**dass** die asymmetrische Verteilung der Hochebenen (5) innerhalb einer Periode (T) der Mesastruktur (2) derart ausgebildet ist, dass im wesentlichen nur für TE polarisierte Wellen des Lichts (22) die Beugungseffizienz (E_{TE}) in der einzigen, vorbestimmten negativen oder positiven Beugungsordnung grösser als in den andern Beugungsordnungen ist, und dass für TM polarisierte Wellen des Lichts (22) die Mesastruktur (2) als Spiegel wirkt.

9. Sicherheitselement nach Anspruch 6,
**dadurch gekennzeichnet,**
**dass** die asymmetrische Verteilung der Hochebenen (5) innerhalb einer Periode (T) der Mesastruktur (2) derart ausgebildet ist, dass für TE polarisierte Wellen des Lichts (22) die in der negativen Beugungsordnung einer vorbestimmten Ordnung feststellbare Beugungseffizienz (E_{-TE}) wenigstens doppelt so gross ist wie die Beugungseffizienz (E_{+TE}) in der positiven Beugungsordnung der gleichen Ordnung, und dass für TM polarisierte Wellen des Lichts (22) die in der gleichen vorbestimmten Ordnung messbare Beugungseffizienz (E_{+TM}) in der positiven Beugungsordnung wenigstens doppelt so gross ist wie die Beugungseffizienz (E_{-TM}) in der negativen Beugungsordnung.

10. Sicherheitselement nach Anspruch 1,
**dadurch gekennzeichnet,**
**dass** das Sicherheitselement ein in ein Laminat aus transparentem Kunststoff eingebettetes Flächenmuster aufweist, das eine mosaikartige Anordnung von mit mikroskopisch feinen Gitterstrukturen belegten Flächenelementen (25, 26; 28; 29; 30), die einfallendes Licht (22) mit einer Wellenlänge (λ) beugen, streuen oder spiegeln aufweist, wobei die optische Wirksamkeit der Gitterstrukturen mit einer metallischen Reflexionsschicht (11) verstärkt ist, und dass die binäre Gitterstruktur wenigstens in einem ersten der Flächenelemente (25, 26; 28; 29; 30) angeordnet ist.

11. Sicherheitselement nach Anspruch 10,
**dadurch gekennzeichnet,**
**dass** die Mesastruktur (2) fünf innerhalb der Periode (T) asymmetrisch verteilte Hochebenen (5) mit Impuisbreiten (t) kleiner als ein Fünftel der Wellenlänge (λ) des Sichtbaren einfallenden Lichts (22) aufweist, und dass die Beugungseffizienz der Mesastruktur (2) sowohl für TE polarisierte Wellen des Lichts (22) als auch für TM polarisierte Wellen des Lichts (22) in die minus erste Beugungsordnung wenigstens um einen Faktor 5 grösser ist als die Beugungseffizienz in einer der übrigen Beugungsordnungen.

12. Sicherheitselement nach Anspruch 10,
**dadurch gekennzeichnet,**
**dass** die Mesastruktur (2) fünf innerhalb der Periode (T) asymmetrisch verteilte Hochebenen (5) aufweist,
**dass** innerhalb der Periode bei vier der Hochebenen (5) die Impulsbreiten (t) kleiner als ein Fünftel der Wellenlänge (λ) des Sichtbaren einfallenden Lichts (22) sind und die Impulsbreite (t) der fünften Hochebene (5) grösser als die Summer der vier andern Impulsbreiten (t) ist, dass für das senkrecht einfallende Licht (22) die Beugungseffizienz der Mesastruktur (2) für TE polarisierte Wellen des Lichts (22) in die minus erste Beugungsordnung wenigstens dreissigmal grösser ist als die Beugungseffizienz für die TE polarisierten Wellen in einer der übrigen Beugungsordnungen und dass für TM polarisierte Wellen des Lichts (22) die Mesastruktur (2) als Spiegel wirkt.

13. Sicherheitselement nach Anspruch 10,
**dadurch gekennzeichnet,**
**dass** die Mesastruktur (2) drei innerhalb der Periode (T) asymmetrisch verteilte Hochebenen (5) aufweist,
**dass** innerhalb der Periode (T) bei zwei der Hochebenen (5) die Impulsbreiten (t) kleiner als ein Fünftel der Wellenlänge (λ) des Sichtbaren einfallenden Lichts (22) sind und die Impulsbreite (t) der dritten Hochebene (5) grösser als die Summe der zwei andern Impulsbreiten (t) ist,
**dass** beim senkrecht einfallenden Licht (22) die Beugungseffizienz der Mesastruktur (2) für die minus erste Beugungsordnung bei TE polarisierten Wellen des einfallenden Lichts (22) wenigstens zweimal grösser ist als für TM polarisierte Wellen des einfallenden Lichts (22), dass die Beugungseffizienz für die plus erste Beugungsordnung bei den TM polarisierten Wellen wenigstens zweimal grösser ist als für die TE polarisierten Wellen, und dass eine Summe der Beugungseffizienzen der TE und der TM polarisierten Wellen in der plus ersten Beugungsordnung im wesentlichen gleich gross wie eine Summe der Beugungseffizienzen der TE und der TM polarisierten Wellen in der minus ersten Beugungsordnung ist.

14. Sicherheitselement nach einem der Ansprüche 10 bis 13,
**dadurch gekennzeichnet,**
**dass** ein zweites, an das Flächenelement (25) mit der Mesastruktur (2) angrenzendes Flächenelement (26) mit einem symmetrischen Beugungsgitter belegt ist, und dass die Mesastruktur (2) und das symmetrische Beugungsgitter die gleiche Periode (T) und die gleiche azimutale Ausrichtung der Gitterstruktur aufweisen.

15. Sicherheitselement nach einem der Ansprüche 10 bis 13,
**dadurch gekennzeichnet,**
**dass** ein zweites, an das Flächenelement (25) mit der Mesastruktur (2) angrenzendes Flächenelement (26) mit der gleichen Mesastruktur (2) belegt ist, und dass sich die beiden Mesastrukturen (2) in der ausgezeichneten Richtung (19) der binären Gitterstruktur unterscheiden.

16. Sicherheitselement nach Anspruch 14 oder 15,
**dadurch gekennzeichnet,**
**dass** Flächenhelligkeiten der aneinander grenzenden Flächenelemente (25, 26) so abgeglichen sind, dass die Flächenhelligkeit des ersten Flächenelementes (25) dem lichtschwächeren zweiten Flächenelement (26) angeglichen ist, wobei im ersten Flächenelement (25) der Anteil der Gitterstruktur durch eine rasterförmige Anordnung von Licht (22) ablenkenden Rasterelementen (31) verkleinert ist, die Abmessungen kleiner als 0,3 mm aufweisen.

## Claims

1. Security element having a light-diffracting binary grating structure with a microscopic mesa structure (2) composed of elevated planes (5) separated by substantially rectangular valleys (4), the periodically repeating arrangement of the valleys (4) within a period (T) of the mesa structure (2) being an additive superimposition of at least three phase-shifted rectangular structures (R) with a pulse width (t₁; t₂; t₃....) of the period (T) of the mesa structure (2), the rectangular structures (R) exhibiting a phase shift (φ₁; φ₂; φ₃...) relative to one another in such a way that the elevated planes (5) of one rectangular structure (R) fall into the valleys of the other rectangular structures (R), and that the mesa structure (2) has an optically active profile height (h) with a value in the range from 25 nm to 5000 nm, **characterized in that** a boundary surface (14) of the mesa structure (2) is designed to be metally reflecting for visible incident light (22) of wavelength (λ), and **in that** the period (T) of the mesa structure (2) has a value in the range from 250 nm to 5000 nm, and at least one valley (4) between two elevated planes (5) has a width of greater than a seventh of the period (T).

2. Security element according to Claim 1, **characterized in that** the boundary surface (14) of the mesa structure (2) is designed as a reflective layer (11) and arranged between a resist layer (10) and a protective layer (13).

3. Security element according to Claim 1, **characterized in that** the mesa structure (2) is formed in a metal surface and optionally provided with a protective layer (16) filling the valleys (4).

4. Security element according to one of Claims 1 to 3, **characterized in that** the smallest structural width of the mesa structure (2) is less than a fifth of the wavelength (λ) of the incident light (22).

5. Security element according to one of Claims 1 to 4, **characterized in that** the period (T) of the mesa structure (2) changes in a direction parallel to the valleys (4) such that the valleys (4) diverge or meander.

6. Security element according to one of Claims 1 to 5, **characterized in that** the distribution of the elevated planes (5) within the period (T) of the mesa structure (2) is asymmetric, the sum of the pulse widths (t₁; t₂; t₃...) of all the elevated plane's (5) being smaller in one half period than the sum of the pulse widths (t₁; t₂; t₃...) of all the elevated planes (5) in the other half period, and **in that** the parameters of pulse width (t₁; t₂; t₃...), number N of the rectangular structures (R) and their phase shift (φ₁; φ₂; φ₃...) are predetermined in such a way that the mesa structure (2) has diffraction efficiencies (E) for the various diffraction orders which are asymmetric for the incident light (22).

7. Security element according to Claim 6, **characterized in that** the asymmetric distribution of the elevated planes (5) within a period (T) of the mesa structure (2) is designed in such a way that both TE polarized waves of the light (22) and also TM polarized waves of the light (22) are deflected asymmetrically into a single, predetermined negative or positive diffraction order.

8. Security element according to Claim 6, **characterized in that** the asymmetric distribution of the elevated planes (5) within a period (T) of the mesa structure (2) is designed in such a way that the diffraction efficiency (E_{TE}) in the single, predetermined negative or positive diffraction order is greater than in the other diffraction orders essentially only for TE polarized waves of the light (22), and **in that** the mesa structure (2) acts as a mirror for TM polarized waves of the light (22).

9. Security element according to Claim 6, **characterized in that** the asymmetric distribution of the elevated planes (5) within a period (T) of the mesa structure (2) is designed in such a way that for TE polarized waves of light (22) the diffraction efficiency (E_{-TE}) which can be determined in the negative diffraction order of a predetermined order is at least twice as large as the diffraction efficiency (E_{+TE}) in the positive diffraction order of the same order, and **in that** for TM polarized waves of the light (22) the diffraction efficiency (E_{+TM}), which can be measured in the same predetermined order, in the positive diffraction order is at least twice as large as the diffraction efficiency (E_{-TM}) in the negative diffraction order.

10. Security element according to Claim 1, **characterized in that** the security element has a surface pattern which is embedded in a laminate made from transparent plastic and has a mosaic-like arrangement of surface elements (25, 26; 28; 29; 30) which are occupied by microscopically fine grating structures and diffract, scatter or reflect incident light (22) with a wavelength (λ), the optical performance of the grating structures being amplified with the aid of a metallic reflective layer (11), and **in that** the binary grating structure is arranged at least in a first one of the surface elements (25, 26; 28; 29; 30).

11. Security element according to Claim 10, **characterized in that** the mesa structure (2) has five elevated planes (5) which are distributed asymmetrically within the period (T) and have pulse widths (t) of less than one fifth of the wavelength (λ) of the visible incident light (22), and **in that**, both for TE polarized waves of the light (22) and for TM polarized waves of the light (22), the diffraction efficiency of the mesa structure (2) in the negative first diffraction order is greater at least by a factor of 5 than the diffraction efficiency in one of the remaining diffraction orders.

12. Security element according to Claim 10, **characterized in that** the mesa structure (2) has five elevated planes (5) distributed asymmetrically within the period (T), **in that** for four of the elevated planes (5) within the period the pulse widths (t) are smaller than a fifth of the wavelength (λ) of the visible incident light (22), and the pulse width (t) of the fifth elevated plane (5) is greater than the sum of the four other pulse widths (t), **in that** for the perpendicular incident light (22) the diffraction efficiency of the mesa structure (2) for TE polarized waves of the light (22) in the negative first diffraction order is at least thirty times greater than the diffraction efficiency for the TE polarized waves in one of the remaining diffraction orders, and **in that** the mesa structure (2) acts as a mirror for TM polarized waves of the light (22).

13. Security element according to Claim 10, **characterized in that** the mesa structure (2) has three elevated planes (5) distributed asymmetrically within the period (T), **in that** for two of the elevated planes (5) within the period (T) the pulse widths (t) are smaller than a fifth of the wavelength (λ) of the visible incident light (22), and the pulse width (t) of the third elevated plane (5) is greater than the sum of the two other pulse widths (t), **in that** given perpendicularly incident light (22) the diffraction efficiency of the mesa structure (2) for the negative first diffraction order is at least twice as great for TE polarized waves of the incident light (22) than for TM polarized waves of the incident light (22), **in that** the diffraction efficiency for the positive first diffraction order is at least twice as great for the TM polarized waves than for the TE polarized waves, and **in that** a sum of diffraction efficiencies of the TE and the TM polarized waves in the positive first diffraction order is essentially the same magnitude as a sum of the diffraction efficiencies of the TE and the TM polarized waves in the negative first diffraction order.

14. Security element according to one of Claims 10 to 13, **characterized in that** a second surface element (26), adjoining the surface element (25) with the mesa structure (2), is occupied by a symmetrical diffraction grating, and **in that** the mesa structure (2) and the symmetrical diffraction grating have the same period (T) and the same azimuthal alignment of the grating structure.

15. Security element according to one of Claims 10 to 13, **characterized in that** a second surface element (26), adjoining the surface element (25) with the mesa structure (2), is occupied by the same mesa structure (2), and **in that** the two mesa structures (2) differ in the marked direction (19) of the binary grating structure.

16. Security element according to Claim 14 or 15, **characterized in that** surface brightnesses of the mutually adjoining surface elements (25, 26) are matched such that the surface brightness of the first surface element (25) is adapted to the less luminous second surface element (26), the fraction of the grating structure being, reduced in the first surface element (25) by a raster-like arrangement of light (22) deflecting raster elements (31) which have dimensions of less than 0.3 mm.

## Revendications

1. Elément de sécurité avec une structure réseau binaire produisant une diffraction de la lumière, avec une structure mesa microscopique (2), se composant de plateaux (5), séparés essentiellement par des creux rectangulaires (4), l'agencement des creux (4), se répétant périodiquement au sein d'une période (T) de la structure mesa (2), étant une superposition supplémentaire d'au moins trois structures rectangulaires (R) à décalage de phases avec une largeur d'impulsion (t₁ ; t₂ ; t₃ ; ...) de la période (T) de la structure mesa (2), les structures rectangulaires (R) présentant, l'une vis-à-vis de l'autre, un décalage de phase (φ₁ ; φ₂ ; φ₃ ; ...), de telle sorte que les plateaux (5) de l'une des structures rectangulaires (R) tombent dans les creux des autres structures rectangulaires (R) et que la structure mesa (2) possède une hauteur de profil (h) optiquement efficace, avec une valeur comprise dans la plage de 25 nm à 5 000 nm,
**caractérisé en ce**
**qu'**une surface limite (14) de la structure mesa (2) pour la lumière incidente visible (22) d'une longueur d'onde (λ) est constituée d'une manière métalliquement réfléchissante et que la période (T) de la structure mesa (2) présente une valeur comprise dans la plage de 250 nm à 5 000 nm et présente au moins un creux (4) entre deux plateaux (5) d'une largeur supérieure à un septième de la période (T).

2. Elément de sécurité selon la revendication 1,
**caractérisé en ce**
**que** la surface limite (14) de la structure mesa (2) est constituée en tant que couche réflectrice (11 ) et est disposée entre une couche de peinture (10) et une couche de protection (13).

3. Elément de sécurité selon la revendication 1,
**caractérisé en ce**
**que** la structure mesa (2) est moulée dans une surface de métal et est équipée en option d'une couche de protection (16), qui remplit les creux (4).

4. Elément de sécurité selon l'une des revendications 1 à 3,
**caractérisé en ce**
**que** la plus petite largeur de structure de la structure mesa (2) est inférieure à un cinquième de la longueur d'onde (λ) de la lumière incidente (22).

5. Elément de sécurité selon l'une des revendications 1 à 4,
**caractérisé en ce**
**que** la période (T) de la structure mesa (2) change, dans une direction parallèle aux creux (4), de sorte que les creux (4) divergent ou décrivent des méandres.

6. Elément de sécurité selon l'une des revendications 1 à 5,
**caractérisé en ce**
**que** la répartition des plateaux (5) au sein d'une période (T) de la structure mesa (2) est asymétrique, la somme des largeurs d'impulsion (t₁ ; t₂ ; t₃ ; ...) de tous les plateaux (5) dans l'une des demi-périodes étant inférieure à la somme des largeurs d'impulsion (t₁ ; t₂ ; t₃ ; ...) de tous les plateaux (5) dans l'autre demi-période et les paramètres : largeur d'impulsion (t₁ ; t₂ ; t₃ ; ...), nombre N des structures rectangulaires (R) et leur décalage de phases (φ₁ ; φ₂ ; φ₃ ; ...) étant prédéfinis de telle sorte que la structure mesa (2) pour la lumière incidente (22) présente une efficacité de diffraction (E) asymétrique pour les différents ordres de diffraction.

7. Elément de sécurité selon la revendication 6,
**caractérisé en ce**
**que** la répartition asymétrique des plateaux (5) au sein d'une période (T) de la structure mesa (2) est constituée de telle sorte que tant les ondes polarisées TE de la lumière (22) que les ondes polarisées TM de la lumière (22) sont déviées asymétriquement en un seul ordre de diffraction prédéfini, négatif ou positif.

8. Elément de sécurité selon la revendication 8,
**caractérisé en ce**
**que** la répartition asymétrique des plateaux (5) au sein d'une période (T) de la structure mesa (2) est constituée de telle sorte que l'efficacité de diffraction (E_{TE}) dans l'unique ordre de diffraction prédéfini, négatif ou positif, n'est supérieure à l'efficacité de diffraction, rencontrée dans les autres ordres de diffraction, sensiblement que pour les ondes polarisées TE de la lumière (22) et que la structure (2) agit comme image pour les ondes polarisées TM de la lumière (22).

9. Elément de sécurité selon la revendication 6,
**caractérisé en ce**
**que** la répartition asymétrique des plateaux (5) au sein d'une période (T) de la structure mesa (2) est constituée de telle sorte que l'efficacité de diffraction (E_{-TE}), pouvant être déterminée dans l'ordre de diffraction négatif d'un ordre prédéfini, pour des ondes polarisées TE de la lumière (22) est au moins deux fois plus grande que l'efficacité de diffraction (E_{+TE}) dans l'ordre de diffraction positif du même ordre et que l'efficacité de diffraction (E_{+TM}), pouvant être mesurée dans le même ordre prédéfini, dans l'ordre de diffraction positif est au moins deux fois plus grande que l'efficacité de diffraction (E_{-TM}) dans l'ordre de diffraction négatif, pour des ondes polarisées TM de la lumière (22).

10. Elément de sécurité selon la revendication 1,
**caractérisé en ce**
**que** l'élément de sécurité présente une structure, insérée dans un aggloméré laminé en matière plastique transparente, qui présente un agencement en mosaïque d'éléments de surface (25, 26 ; 28 ; 29 ; 30), garnis de structures réseau microscopiquement fines, qui diffractent, dispersent ou reflètent la lumière incidente (22) avec une longueur d'onde (λ), l'efficacité optique des structures réseau étant renforcée grâce à une couche réflectrice métallique (11) et que la structure réseau binaire est disposée au moins dans un premier élément parmi les éléments de surface (25, 26 ; 28 ; 29 ; 30).

11. Elément de sécurité selon la revendication 10,
**caractérisé en ce**
**que** la structure mesa (2) présente cinq plateaux (5), répartis asymétriquement au sein de la période (T), avec des largeurs d'impulsion (t) inférieures à un cinquième des longueurs d'onde (λ) de la lumière incidente visible (22) et que l'efficacité de diffraction de la structure mesa (2) est supérieure, tant pour les ondes polarisées TE de la lumière (22) que pour les ondes polarisées TM de la lumière (22), dans le premier ordre de diffraction négatif, d'au moins 5 fois, à l'efficacité de diffraction dans l'un des autres ordres de diffraction.

12. Elément de sécurité selon la revendication 10,
**caractérisé en ce**
**que** la structure mesa (2) présente cinq plateaux (5), répartis asymétriquement au sein de la période (T), en ce
**qu'**au sein de la période, dans le cas de quatre des plateaux (5), les largeurs d'impulsion (t) sont inférieures à un cinquième de la longueur d'onde (λ) de la lumière incidente visible (22) et que la largeur d'impulsion (t) du cinquième plateau (5) est supérieure aux sommes des quatre autres largeurs d'impulsion (t),
**que** l'efficacité de diffraction de la structure mesa (2) pour la lumière verticalement incidente (22) est au moins trente fois supérieure, pour les ondes polarisées TE de la lumière (22) dans le premier ordre de diffraction négatif, à l'efficacité de diffraction pour les ondes polarisées TE dans l'un des autres ordres de diffraction et
**que** la structure mesa (2) agit comme image pour les ondes polarisées TM de la lumière (22).

13. Elément de sécurité selon la revendication 10,
**caractérisé en ce**
**que** la structure mesa (2) présente trois plateaux (5), répartis asymétriquement au sein de la période (T),
**qu'**au sein de la période (T), dans le cas de deux des plateaux (5), les largeurs d'impulsion (t) sont inférieures à un cinquième de la longueur d'onde (λ) de la lumière incidente visible (22) et que la largeur d'impulsion (t) du troisième plateau (5) est supérieure à la somme des deux autres largeurs d'impulsion (t),
**que**, dans le cas de la lumière verticalement incidente (22), l'efficacité de diffraction de la structure mesa (2) est au moins deux fois plus grande, pour le premier ordre de diffraction négatif, dans le cas des ondes polarisées TE de la lumière incidente (22), que pour les ondes polarisées TM de la lumière incidente (22), que l'efficacité de diffraction est au moins deux fois plus grande, pour le premier ordre de diffraction positif, dans le cas des ondes polarisées TM, que pour les ondes polarisées TE et
**qu'**une somme de l'efficacité de diffraction des ondes polarisées TE et TM est essentiellement la même, dans le premier ordre de diffraction positif, qu'une somme de l'efficacité de diffraction des ondes polarisées TE et TM, dans le premier ordre de diffraction négatif.

14. Elément de sécurité selon l'une des revendications 10 à 13,
**caractérisé en ce**
**qu'**un deuxième élément de surface (26), voisin de l'élément de surface (25) avec la structure mesa (2), est pourvu d'un réseau de diffraction symétrique et que la structure mesa (2) et le réseau de diffraction symétrique présentent la même période (T) et la même orientation azimutale de la structure de réseau.

15. Elément de sécurité selon l'une des revendications 10 à 13,
**caractérisé en ce**
**qu'**un deuxième élément de surface (26), voisin de l'élément de surface (25) de la structure mesa (2), est garni de la même structure mesa (2) et que les deux structures mesa (2) se différencient, dans la direction (19) marquée, de la structure de réseau binaire.

16. Elément de sécurité selon la revendication 14 ou 15,
**caractérisé en ce**
**que** des luminosités surfaciques des éléments de surface mutuellement voisins (25, 26) sont réglées, de telle sorte que la luminosité surfacique du premier élément de surface (25) est harmonisée avec le deuxième élément de surface (26) de luminosité plus faible, la proportion de la structure réseau, dans le premier élément de surface (25), étant diminuée par un agencement en grille d'éléments de grille (31), déviant la lumière (22), éléments de grille qui présentent des dimensions inférieures à 0,3 mm.
